# EUROPEAN PATENT APPLICATION

(11) **EP 1 376 582 A2**
(43) Date of publication of application: **02.01.2004**
(21) Application number: 03012635.3
(22) Date of filing: 03.06.2003
(51) Int. Cl.: G11B 27/031, G06F 17/30, G09B 5/06, H04N 5/272

(54) **Computer user interface for viewing video compositions generated from a video composition authoring system using video cliplets**

(30) Priority: 19.06.2002 US 177882
(71) Applicant: MICROSOFT CORPORATION, Redmond, WA 98052 (US)
(72) Inventor: Toyama, Kentaro, Redmond, WA 98052 (US); Fisher, Sheldon, Sammamish, WA 98075 (US); Soupliotis, Andreas, Bothell, WA 98012 (US)
(74) Representative: Grünecker, Kinkeldey, Stockmair & Schwanhäusser Anwaltssozietät

(57) **Abstract**

The present invention includes a user interface for displaying and interacting with a video composition generated from a video composition authoring system. The video compositions may include short segments of video (or video "cliplets"). The video composition user interface for displaying the video compositions includes displaying a background area and a plurality of video windows over the background area. Each of the video windows contains multimedia elements such as video, digital photographs, icons, video clipets, and any other type of graphical element. The selection of the contents to fill or populate the video windows is performed by a video composition authoring system. The video composition user interface provides functionality such as text annotation, e-mail feature, title area, cast and credits list generation, and a cliplet drag and drop feature that allows a user to enhance the video composition and have a more pleasant experience viewing the video composition.

## Description

### TECHNICAL FIELD

The present invention relates in general to a computer user interface for viewing video and more particularly to a system and a method for viewing and interacting with video compositions including short segments of video (or video "cliplets") generated from a video composition authoring system.

### BACKGROUND OF THE INVENTION

Video cameras (or camcorders) are devices that are popular with amateur videographers for home use. Video cameras may be a digital camera, which stores digital video on a memory device, or an analog video camera, which stores video footage on magnetic videotape. Video footage captured by an analog video camera may be converted into digitized format using well-known techniques. Digital video may be processed using a software running on a computing devices (such as personal computers) to edit and manipulate the data captured by video cameras.

The traditional home digital video paradigm expects a user to shoot good video, perform tedious video editing, and then output a single large video containing the edited movie. One problem, however, with this paradigm is that raw video footage, even when professionally photographed, is difficult and tedious to edit. Professional editors with professional training and using high-end editing tools can take hour to edit raw video into a final version that is just minutes in duration. Moreover, most raw video footage is boring and poring over hours of raw video is quite a tedious task, especially for an amateur.

Yet another problem is that current video editing software for amateur use is modeled after professional editing systems. This tends to make the software difficult for the average consumer to use. User interfaces of current video editing software typically provide a user with one view of the raw video footage. A timeline is placed along side the footage to give the user temporal orientation. The timeline may include several different "tracks", such as a video 1 track, a video 2 track, an audio 1 track, and so forth. The user interface includes controls similar to a VCR, such as play, fast-forward and rewind buttons. Using these buttons, a user browses the video footage by moving back and forth across the footage using the controls. This process of browsing the video footage is called "scrubbing". Scrubbing raw video footage is used when editing to determine the location of cuts in the video footage. The editing process using scrubbing is a tedious, repetitive and time-consuming task that must necessarily be performed manually.

Nevertheless, an amateur videographer often desires to produce nice, shorter video compositions of their longer, unedited raw video footage. The video composition may be, for example, a "highlights" video that contains the most interesting segments of the raw video footage. However, for the average consumer the process of editing video and using editing software to produce a video composition is a difficult and burdensome task.

Accordingly, there exists a need for a computer user interface that provides a plurality of views of a video composition. In addition, the need exists for a computer user interface that display the video composition in an aesthetically-pleasing arrangement and allows a user to interact with the video composition.

### SUMMARY OF THE INVENTION

The invention disclosed herein includes a computer user interface for displaying and interacting with a video composition. The video composition includes a two-dimensional arrangement or collage of multimedia elements such as music, text, and photographs. In addition, the video composition includes a single viewing window where video multimedia elements (such as video cliplets are chained together and played consecutively (such as a highlight video of a source video). The video composition user interface can display video composition containing ultra-short segment of digital video (called a video cliplet or "cliplet") created by dividing up longer video or a collection of videos. Typically, a video cliplet is expected to be approximately between five and ten seconds in duration, but may be any length in practice. The video composition user interface allows a user to view a video composition as well as change the design of the video composition and add multimedia elements (such as text, titles, and background music).

The video composition user interface is capable of displaying a video composition containing multimedia elements. These multimedia elements include, for example, video, digital photographs, icons, and any other type of graphical element. In addition, these multimedia elements include video cliplets. Using cliplets - video of very short duration - as the main unit of manipulation, rather than large videos, overcomes the problems of the traditional home video editing software. Editing and creating a video composition with cliplets means that the pieces are pre-cut, and that manipulation of the video means using short segments of video instead of long, tedious stretches of video. In addition, when implemented with a video composition authoring system, a user can have as much or as little interaction when creating a video composition. Any information not provided interactively by the user is intelligently provided by the system.

In general, the video composition user interface provides an aesthetically-pleasing layout of a video composition. The video composition includes multimedia elements such as a set of video cliplets, video, background music, background photographs, clip art, text descriptions, titles, and so forth.

The form of the video composition can be, for example, a two-dimensional collage, a single movie, or a photoalbum-style hypertext "book". The video composition user interface for displaying the video compositions includes displaying a background area and a plurality of video windows over the background area. Each of the video windows includes multimedia elements such as video, digital photographs, video cliplets, icons, and any other type of graphical element. The selection of multimedia contents to fill or populate the video windows is performed by a video composition authoring system. The video composition user interface provides functionality such as text annotation, e-mail feature, title area, cast and credits list generation, and a cliplet drag and drop feature that allows a user to enhance the video composition and have a more pleasant experience viewing the video composition.

### BRIEF DESCRIPTION OF THE DRAWINGS

The present invention can be further understood by reference to the following description and attached drawings that illustrate aspects of the invention. Other features and advantages will be apparent from the following detailed description of the invention, taken in conjunction with the accompanying drawings, which illustrate, by way of example, the principles of the present invention.

Referring now to the drawings in which like reference numbers represent corresponding parts throughout:
FIG. 1 is a diagram illustrating the concept of the video cliplet in relation to a source video and video frames.
FIG. 2 is a block diagram illustrating an overview of an exemplary video composition authoring system incorporating the video composition user interface of the present invention.
FIG. 3 is a block diagram illustrating a computing apparatus suitable for carrying out the invention.
FIG. 4 illustrates a general overview of the video composition user interface of the invention.
FIG. 5 is a working example of the video composition user interface shown in FIG. 4.
FIG. 6 is a general flow diagram illustrating the operation of the video composition authoring system shown in FIG. 2.
FIG. 7 is a detailed flow diagram illustrating the operational details of the element selection and layout module shown in FIG. 2.
FIG. 8 is a detailed flow diagram illustrating the operational details of the iterative refinement module shown in FIG. 2.

### DETAILED DESCRIPTION OF THE INVENTION

In the following description of the invention, reference is made to the accompanying drawings, which form a part thereof, and in which is shown by way of illustration a specific example whereby the invention may be practiced. It is to be understood that other embodiments may be utilized and structural changes may be made without departing from the scope of the present invention.

### I. Introduction to Video Cliplets

The video composition user interface described herein includes a system and a method for displaying and interacting with video compositions that can include video cliplets. In general, a video cliplet (or "cliplet") is an ultra-short segment of digital video created by cutting up longer units of video (or a source video). The duration of the cliplet is restricted by a hard or soft constraint that is determined manually by a user or automatically. Typically, a video cliplet is expected to be approximately between five and ten seconds in duration, but may be any length in practice.

The idea of cliplets is that meaningful and short segments of video are extracted from a larger collection of video with only secondary regard for what are traditionally considered shot boundaries. Cliplets, therefore, can be based on other non-traditional cues such as audio cues (such as trying to detect sound bites) or video cues (such as trying to detect zoomed-in close ups). In addition, cliplets can overlap. Cliplets may not cover all of the entire source video. This means that a really boring and uninteresting section of the source video may be excluded altogether. All of this achieves the goal of having each cliplet be a semantically meaningful portion of video.

The following features distinguish a cliplet from other segments of video. First, prior to generation a duration constraint (i.e., a constraint on the cliplet length) is determined. This constraint may take the form of hard upper and lower bounds, or it may be a soft constraint that takes into account other factors, such as average cliplet length over the entire source video, frequency of sub-shot boundaries, variance in cliplet length, local features of the audio or video, and so forth. Second, a cliplet does not necessarily need to be an independent video. The cliplet could be a pair of starting and stopping points denoting where to cut digitized source video to extract the cliplet, or any other representation of a subsequence of video. Third, a cliplet is a semantically meaningful portion of video containing what a viewer might consider a single short event (such as a sound bite). The cliplet has a single theme or a common thread that makes the cliplet stand apart from the larger source video.

The relatively short length of a cliplet as compared to the longer source video allows the cliplet to be manipulated more like a digital photograph rather than a video. Video cliplets allow a shift from away from large videos that are burdensome to manipulate and store. Cliplets focus on short, exciting segments of video rather than on long, dull videos. Consumers tend to become bored watching hours of a long video that contains only a few interesting scenes. Rather than constantly using the fast-forward button, cliplets allow consumers to extract the interesting scenes, the "heart" of the longer source video.

Cliplets also are easier than large videos to manipulate and store. User resistance to uploading and sharing videos due to their large size is minimized by generating cliplets from the digitized source video. Cliplets avoid multi-megabyte or multi-gigabyte videos. By definition, cliplets are smaller than longer units of video. Thus, operations that are impractical on large videos due to limited memory, storage, processing power, bandwidth or human attention can be performed with ease on cliplets. Because of its smaller size, a cliplet has a shorter upload time, makes fewer demands on bandwidth, requires less disk space and generally is easier to manage than large videos.

Most operations that apply to a digital photograph have an analog for video cliplets. Because of its small size, a video cliplet can be browsed using thumbnails, organized by time stamp and gross pixel statistics, cut and pasted into documents, and sent easily over e-mail. In theory, most of these operations already exist for videos but in practice the capabilities are rarely used by consumers because typical home videos are too large, too long and too boring. Image processing and computer vision algorithms that are unable to process large videos can be used easily on cliplets. Technologies such as image stabilization, color correction, panorama creation, three-dimensional depth understanding, face recognition, person tracking can be used on cliplet in real time.

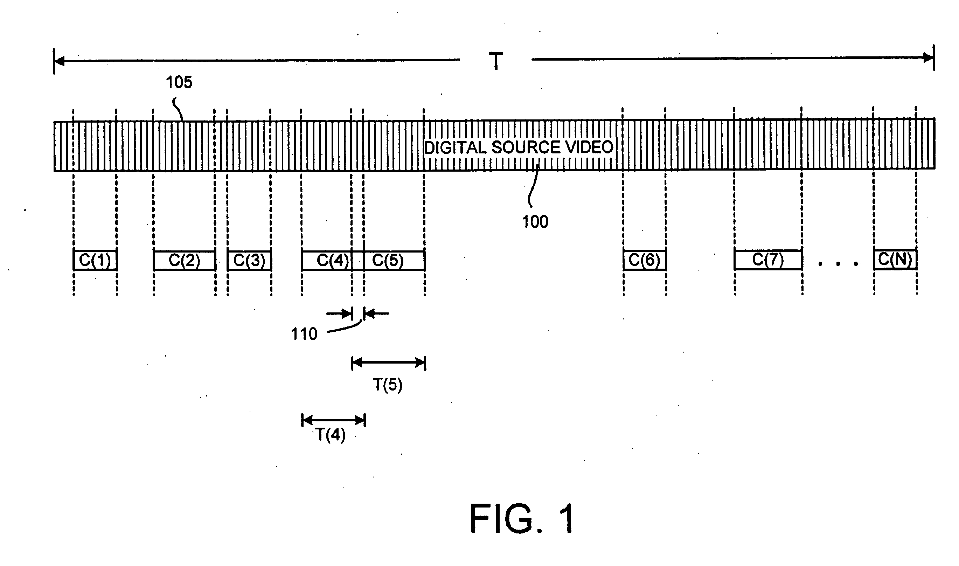

FIG. 1 is a diagram illustrating the concept of the video cliplet in relation to digitized source video and video frames. A digital source video 100 of length or duration T contains a plurality of video frames 105. As shown in FIG. 1, the digital source video 100 is divided into a plurality of cliplets C(1) to C(N). These cliplets can be of varying lengths.

As explained above, each of these cliplets, C(1) to C(N), is a semantically meaningful portion of the digital source video 100. In some cases, two or more cliplets can overlap in time and thus share the same video frames. Referring to FIG. 1, cliplet C(4) has a length T(4) and cliplet C(5) has a length T(5). Even though T(4) is less than T(5), cliplets C(4) and C(5) overlap in time. In addition, cliplets C(4) and C(5) share the video frames shown by reference numeral 110.

### II. General Overview

The video composition computer interface displays and allows interaction with video compositions. The video compositions may include any combination of video cliplets and other types of multimedia elements such as video, digital photographs, icons, and any other type of graphical element. The video composition user interface may be implemented in a video composition authoring system. The system includes data elements such as, for example, a set of cliplefs, a video, a set of directories containing cliplets, and links to cliplets. The output of the system is a aesthetically-pleasing layout or composition that may contain cliplets and other multimedia elements such as music, text and photographs. The video composition output can be thought of as a collage of multimedia elements that are brought together for the purpose of creating the composition. The word "collage" is meant to suggest that smaller elements are pieced together, in time, in space, or both, to create a larger composition. By way of example, a two-dimensional layout of cliplets displayed on a screen is a collage, and so is a single movie composed of several cliplets playing on the screen one after another. The video composition user interface displays and allows interaction with the collage of multimedia elements.

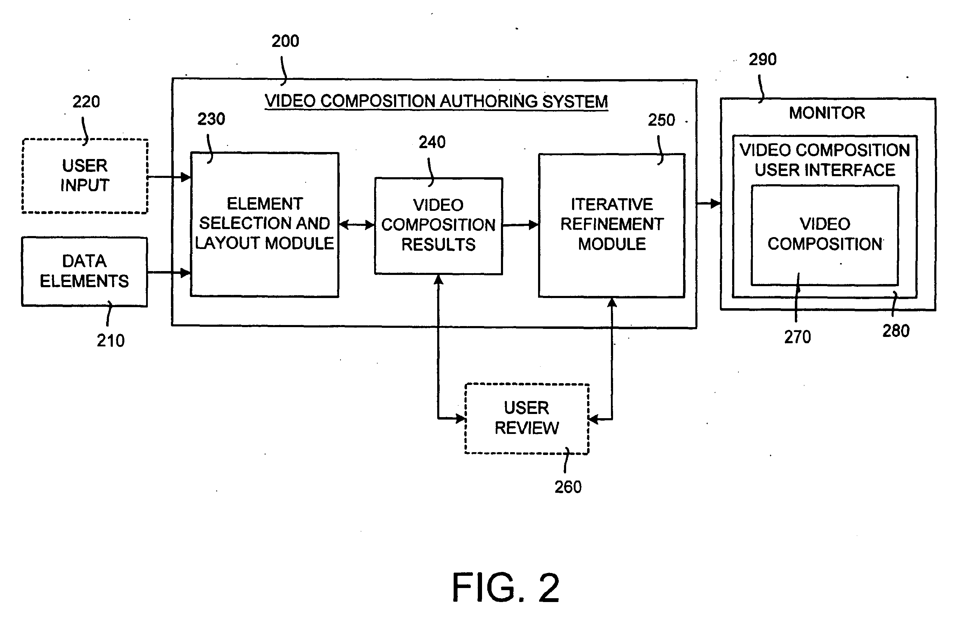

FIG. 2 is a block diagram illustrating an overview of an exemplary video composition authoring system incorporating the video composition user interface of the present invention. In general, the system 200 inputs initial information and outputs a video composition containing multimedia elements. The video composition is displayed to a user using the video composition user interface. In particular, the video composition authoring system 200 inputs data elements 210. The data elements include multimedia elements, parameter information and description information. By way of example, multimedia elements include a set of video cliplets, video, background music, background photographs, clip art, text descriptions, titles, and so forth. Moreover, parameter information describe parameters of the video composition and includes, for example, the size of the composition and the duration of each video within the video composition. In addition, the description information includes, for example, time and location information about the cliplets or video and a description of the desired style or mood of the composition. A user input 220 can be used to select all, none, or any amount between of the data elements 210 to used as input. This user input 220 is an optional process, as shown by the dashed line. If no user input 220 is received, the system 200 automatically selects the data elements 210.

The video composition authoring system 200 includes an element selection and layout module 230 for selecting the data elements and designing the layout of the elements 210 in the video composition. The element selection and layout module 230 uses those data elements 210 selected by a user in the user input 220. If there is no user input 220, then the element selection and layout module 230 automatically selects data elements 210 to use. If there is user input 220 the element selection and layout module 230 uses those data elements 210 as selected by the user. Any data elements 210 that are needed to complete the video composition but were not specified by the user are automatically selected by the element selection and layout module 230 to complement or supplement the user's choices.

Depending on the user's choice of output (or automatically selected if there is no or limited user input 220 available), the element selection and layout module 230 applies an automatic layout algorithm to layout the selected data elements 210. Automatic layout of the data elements 210 occurs in an aesthetically-pleasing manner while respecting any constraints and requests specified by the user in the user input 220. These constraints may be explicit as specified by the user or implicit based on hardware limitations (such as the viewing size of a monitor). Output from the element selection and layout module 230 are preliminary video composition results 240. At this point, the element selection and layout module 230 has generated a preliminary video composition containing selected data elements and in a preliminary layout.

The video composition authoring system 200 includes an iterative refinement module 250 for presenting the preliminary video composition results 240 to the user and allowing the user to change and refine any elements the user does not like. In particular, the iterative refinement module 250 presents the preliminary video composition results 240 to the user for a user review 260. The user review 260 is an optional process, as shown by the dashed lines. If no user review 260 occurs, then the video composition authoring system 200 outputs the preliminary video composition results 240 as a final output.

During the user review 260, the user can view the preliminary video composition results 240 and determine the portions that are unacceptable to him. For example, the iterative refinement module 250 allows the user to change parameters, manually drag and drop different cliplets into the composition, add text bubbles to the cliplets, and crop certain cliplets using tracking algorithms to track moving objects. The changes are made by the iterative refinement module 250 and updated preliminary video composition results 240 containing the refinements are presented to the user. Once the user is satisfied with the current preliminary video composition results 240, the authoring process is finished and a finished video composition 270 is outputted.

The finished video composition 270 is displayed to a user via the video composition user interface 280. Along with displaying the finished video composition 270, the video composition user interface 280 allows user interaction with the video composition 270. The video composition user interface 280 is displayed on a monitor 290. The output form of the finished video composition 270 can be, for example, a two-dimensional collage, a single movie, or a photoalbum-style hypertext "book". The output form can be selected by the user or, in the absence of a user choice, be automatically selected by the system 200.

### III. Exemplary Operating Environment

The video composition user interface 280 of the present invention is designed to operate in a computing environment. The follow discussion is intended to provide a brief, general description of a suitable computing environment in which the invention may be implemented.

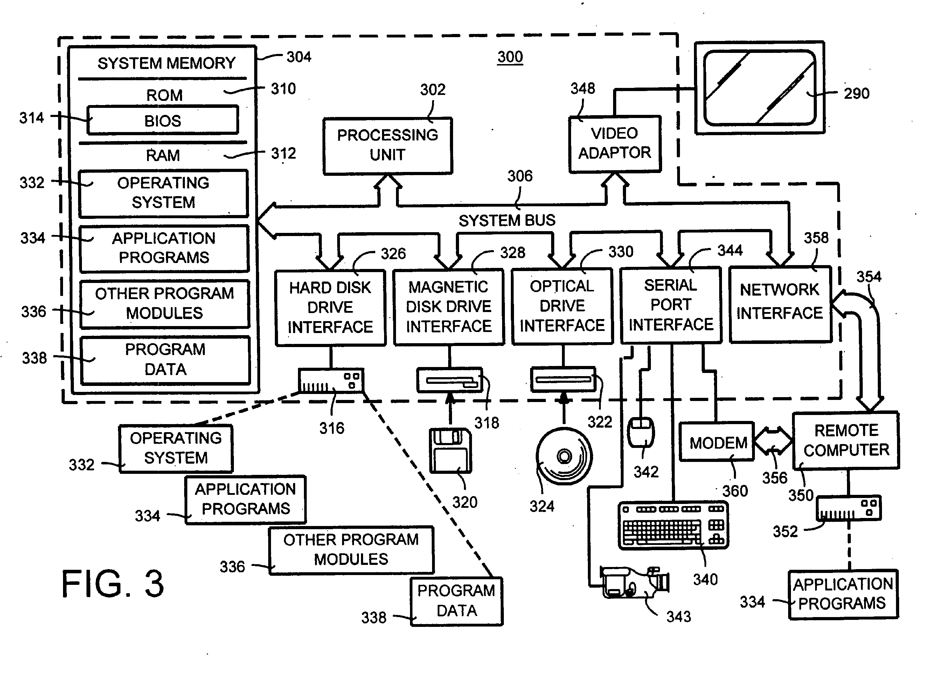

FIG. 3 is a block diagram illustrating a computing apparatus suitable for carrying out the invention. Although not required, the invention will be described in the general context of computer-executable instructions, such as program modules, being executed by a computer. Generally, program modules include routines, programs, objects, components, data structures, etc. that perform particular tasks or implement particular abstract data types. Moreover, those skilled in the art will appreciate that the invention may be practiced with a variety of computer system configurations, including personal computers, server computers, hand-held devices, multiprocessor systems, microprocessor-based or programmable consumer electronics, network PCs, minicomputers, mainframe computers, and the like. The invention may also be practiced in distributed computing environments where tasks are performed by remote processing devices that are linked through a communications network. In a distributed computing environment, program modules may be located on both local and remote computer storage media including memory storage devices.

With reference to FIG. 3, an exemplary system for implementing the invention includes a general-purpose computing device 300. In particular, the computing device 300 includes the processing unit 302, a system memory 304, and a system bus 306 that couples various system components including the system memory 304 to the processing unit 302. The system bus 306 may be any of several types of bus structures including a memory bus or memory controller, a peripheral bus, and a local bus using any of a variety of bus architectures. The system memory includes read only memory (ROM) 310 and random access memory (RAM) 312. A basic input/output system (BIOS) 314, containing the basic routines that help to transfer information between elements within the computing device 300, such as during start-up, is stored in ROM 310. The computing device 300 further includes a hard disk drive 316 for reading from and writing to a hard disk, not shown, a magnetic disk drive 318 for reading from or writing to a removable magnetic disk 320, and an optical disk drive 322 for reading from or writing to a removable optical disk 324 such as a CD-ROM or other optical media. The hard disk drive 316, magnetic disk drive 328 and optical disk drive 322 are connected to the system bus 306 by a hard disk drive interface 326, a magnetic disk drive interface 328 and an optical disk drive interface 330, respectively. The drives and their associated computer-readable media provide nonvolatile storage of computer readable instructions, data structures, program modules and other data for the computing device 300.

Although the exemplary environment described herein employs a hard disk, a removable magnetic disk 320 and a removable optical disk 324, it should be appreciated by those skilled in the art that other types of computer readable media that can store data that is accessible by a computer, such as magnetic cassettes, flash memory cards, digital video disks, Bernoulli cartridges, random access memories (RAMs), read-only memories (ROMs), and the like, may also be used in the exemplary operating environment.

A number of program modules may be stored on the hard disk, magnetic disk 320, optical disk 324, ROM 310 or RAM 312, including an operating system 332, one or more application programs 334, other program modules 336 (such as the video composition authoring system 200) and program data 338. A user (not shown) may enter commands and information into the computing device 300 through input devices such as a keyboard 340 and a pointing device 342 (such as a mouse). In addition, a camera 343 (such as a video camera) may be connected to the computing device 300 as well as other input devices (not shown) including, for example, a microphone, joystick, game pad, satellite dish, scanner, or the like. These other input devices are often connected to the processing unit 302 through a serial port interface 344 that is coupled to the system bus 306, but may be connected by other interfaces, such as a parallel port, a game port or a universal serial bus (USB). The monitor 290 (or other type of display device) is also connected to the system bus 306 via an interface, such as a video adapter 348. In addition to the monitor 290, computing devices such as personal computers typically include other peripheral output devices (not shown), such as speakers and printers.

The computing device 300 may operate in a networked environment using logical connections to one or more remote computers, such as a remote computer 350. The remote computer 350 may be another personal computer, a server, a router, a network PC, a peer device or other common network node, and typically includes many or all of the elements described above relative to the computing device 300, although only a memory storage device 352 has been illustrated in FIG. 3. The logical connections depicted in FIG. 3 include a local area network (LAN) 354 and a wide area network (WAN) 356. Such networking environments are commonplace in offices, enterprise-wide computer networks, intranets and the Internet.

When used in a LAN networking environment, the computing device 300 is connected to the local network 354 through a network interface or adapter 358. When used in a WAN networking environment, the computing device 300 typically includes a modem 360 or other means for establishing communications over the wide area network 356, such as the Internet. The modem 360, which may be internal or external, is connected to the system bus 306 via the serial port interface 344. In a networked environment, program modules depicted relative to the computing device 300, or portions thereof, may be stored in the remote memory storage device 352. It will be appreciated that the network connections shown are exemplary and other means of establishing a communications link between the computers may be used.

### IV. Video Composition User Interface

The video composition user interface 280 of the invention displays to a user a video composition in an aesthetically-pleasing collage of multimedia elements. In addition, the video composition user interface 280 provides a user with functionality to interact with the collage.

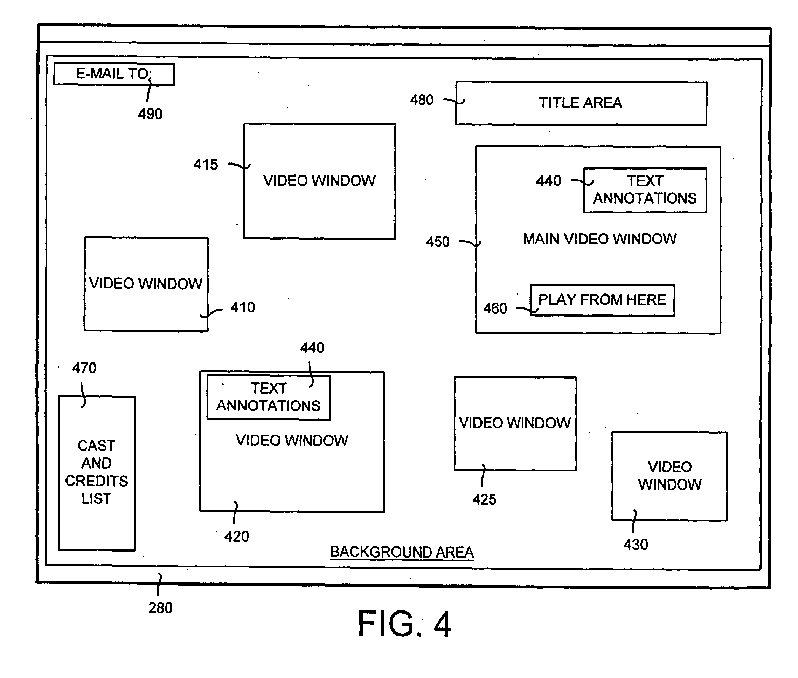

FIG. 4 illustrates a general overview of the video composition user interface 280 of the invention. In general, a video composition is displayed using the user interface 280 in an aesthetically-pleasing manner and such that a user can interact with the composition. Specifically, the video composition user interface 280 includes a background area 400 that contains a background photograph or video. This background area 400 provides a pleasing backdrop to present the video composition. The video composition user interface 280 includes a plurality of video windows 410, 415, 420, 425, 430 that display video and video cliplets in a two-dimensional arrangement. The video windows are arranged in front of the background area 400 in an aesthetically-pleasing manner such that the video composition is visually appealing to the user. This arrangement may include arrangements in other than a strict row and column arrangement.

The video windows 410, 415, 420, 425, 430 contain any combination of multimedia elements, including video and video cliplets. In addition, the video composition user interface 280 allows a user to add text annotations 440. These text annotations 440 may be descriptive, comical or some other use of text to describe the contents of that video window. As shown in FIG. 4, video windows 420 contains the text annotations 440. It should be noted, however, that any of the video windows 410, 415, 420, 425, 430 and the background area 400 can contain text annotations 440.

A main video window 450 is provided in the video composition user interface 280 to enable the playing of video or video cliplets therein. The video window 450 provides a larger and more centralized viewing space for which video and cliplets can be viewed. Using drag and drop functionality, a user can drag and drop the contents (such as a video cliplet) of any of the video windows 410, 415, 420, 425, 430 into the main video window 450. The main video window also allows text annotations 440 to be added to the main video window 450. A "Play from Here" feature 460 allows a user to place a video or cliplet in the main video window 450 and play the video or cliplet forward to the end from the current position in the video or cliplet.

The video composition user interface also includes a drag and drop functionality. As described above, this functionality allows a user to use a pointing device (such as a mouse) to drag contents of the video windows 410, 415, 420, 425, 430 and drop these contents into the main video window 450. In addition, the user can drag and drop a video window contents to the "Play from Here" feature 460 and the contents will play forward from the current position in the video. Drag and drop functionality also can be used to move the video windows 410, 415, 420, 425, 430 around in an arrangement that is pleasing to the user.

The video composition user interface 280 also includes a cast and credits list feature 470 that allows a user to interactively generate a list of who is in the video composition and who is responsible for its production. In addition, video composition user interface 280 includes a title area 480 that allows a user to interactively enter a title for the video composition and have the title displayed where the user chooses.

The video composition user interface 280 allows video cliplets to be sorted by cliplet interest ratings. As explained in detail below, cliplet interest ratings can be based on any information relevant to and available for a cliplet. These ratings can be grouped into interest ratings categories, such as, for example, a face detection category and a zoom category. Cliplets can be sorted and displayed on the video composition user interface 280 in order from best to worst, or in any other ranking manner desired.

### Video Composition Output

The video composition user interface 280 can display the video composition in a variety of output formats. These formats include:

### Cliplet Collage .

In this format, the video composition is a cliplet collage that includes video cliplets within the plurality of video windows 410, 415, 420, 425, 430. Thus, a cliplet is contained in each of the video windows 410, 415, 420, 425, 430. A user can play each cliplet within a window by clicking on the cliplet. In addition, using drag and drop functionality, the user can rearrange the cliplets as desired within the user interface 280.

### Automatic Highlight Video

The video composition user interface 280 can display and allow interaction with a single video created each of the plurality of video windows 410, 415, 420, 425, 430. In other words, a single highlight video is played within the main video window 450. The highlight video is generated by chaining each of the multimedia contents of the video windows (such as cliplets) together. The order of the chaining can be selected automatically by the system or selected by the user using drag and drop functionality. Interesting transitions between the selected cliplets, such as fades, may be user or system selected. This is a fun highlight video with little work required on the part of the user.

### Video Postcard

The video composition user interface 280 can contain an e-mail function 490 that allows the entire video composition to be sent by e-mail such that a video postcard is created. For example, the recipient of the e-mail could open the e-mail and click on each of the video window 410, 415, 420, 425, 430 and the main window 450 to play the cliplet in that window. This is a new way to experience video.

### V. Working Example and Operational Details

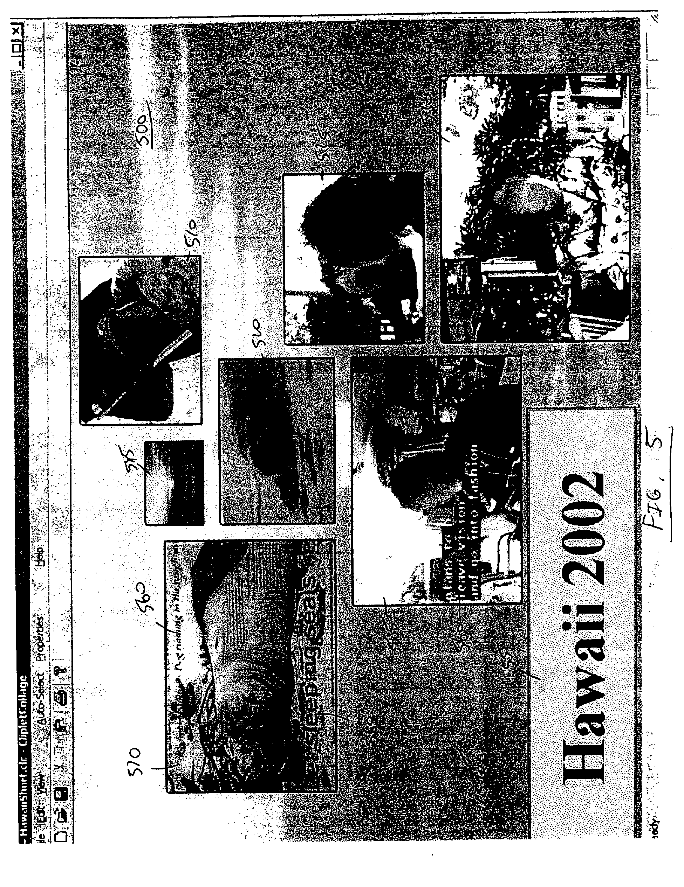

FIG. 5 is a working example of the video composition user interface shown in FIG. 4. It should be noted that this working example is only one way in which the video composition user interface 280 may be implemented. As shown in FIG. 5, the video composition user interface 280 is displaying a cliplet collage video composition 500 that includes a plurality of windows 510, 515, 520, 525, 530, 535 over a background picture 540. Each of the plurality of windows 510, 515, 520, 525, 530, 535 contains a cliplet. In this example, the cliplet collage video composition 500 is composed of video taken in Hawaii, and thus has a Hawaiian theme. The background picture 540 is of a sunset and the cliplets contain images from that vacation.

The cliplet collage video composition 500 also contains a title 550 that reads "Hawaii 2002". A text annotation 560 has been added to video window 535. A main video window 570 contains a cliplet of a Hawaiian monk seal lying on the beach. Text annotation 560 is added to the main video window 570 to add information and interest to the cliplet within the main video window 570. Also included in the cliplet collage video composition 500 is an audio file containing Hawaiian music.

### Video Composition Authoring System

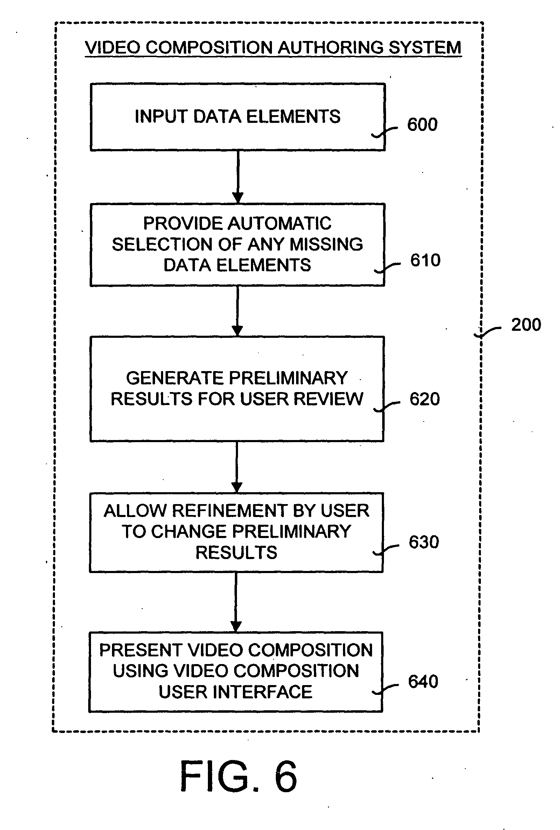

FIG. 6 is a general flow diagram illustrating the operation of the video composition authoring system 200 shown in FIG. 2. In general, the video composition authoring system 200 provides an aesthetically-pleasing layout of data elements, including multimedia elements (such as video, cliplet, and sound). This layout is displayed to a viewer using the video composition user interface 280. In particular, the video composition authoring system 200 operates by inputting data elements (box 600). These data elements include multimedia elements, parameter information and description information as described above.

Any data elements that are missing but needed (as determined by the system 200) are automatically selected (box 610). Thus, if a user specifies none or less than all the necessary data elements needed to author a video composition, then the missing data elements are automatically chosen by the system 200. Next, preliminary video composition results are generated for user review (box 620). The user is allowed to makes refinements and changes to change any portion of the preliminary video composition results (box 630). Once the user is happy with the preliminary video composition results, a final video composition containing the changes is generated. The final video composition is presented using the video composition user interface 280 (box 640).

### Element Selection and Layout Module

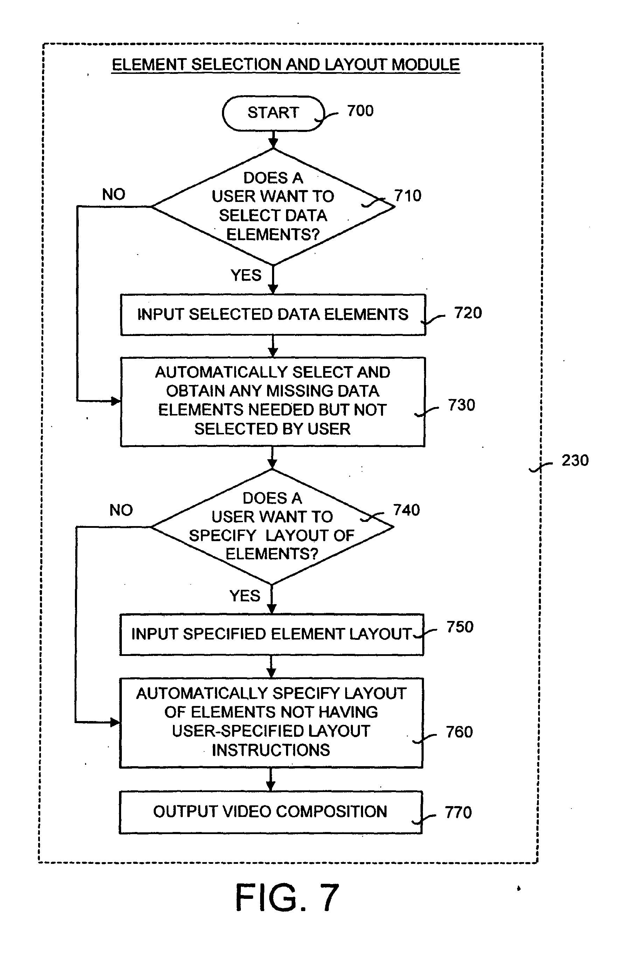

FIG. 7 is a detailed flow diagram illustrating the operational details of the element selection and layout module 230 shown in FIG. 2. The element selection and layout module 230 selects data elements and designs the layout of the elements with a video composition. Selection of the data elements occurs by user-specified instructions, automatically-generated selection by the module 230, or a combination of both.

The operation of the element selection and layout module 230 starts (box 700) by determining whether a user wants to select data elements (box 710). The user has the capability to select all of the data elements, none of the data elements, or a combination of user-selection and automatic-selection. If a user decides to select data elements, the selected data elements are inputted to the module 230 (box 720). Otherwise, the operation skips inputting user selected data element.

Next, the module 230 automatically selects and obtains any missing data element that is needed but was not specified or selected by the user (box 730). The module 230 may automatically select all, none, or any amount in between of the necessary data elements, depending on the amount of user input. Once the data elements are selected a determination is made whether the user wants to specify the layout of the data elements (box 740). If so, then the specified element layout is received as input from the user (box 750). Otherwise, this process is skipped.

The layout of elements not having a layout specified by a user then is automatically performed (box 760). Once again, the number of data elements having their layout determined automatically is a function of how much input the user provides. If little or no user input is provided, then the module 230 automatically specifies the layout for all or most of the selected data elements. On the other hand, if most or all of the layout for the data elements is specified by the user, the module 230 automatically determines few or none of the layout for the data elements. Once the layout of the data elements is determined, a video composition is sent as output (box 770).

### Functionality of the Element Selection and Layout Module

The element selection and layout module 230 contains certain functionality that allows a video composition to be authored. The specific functionality is as follows:

### Cliplet Interest Ratings

If the video composition authoring system 200 uses cliplets, the cliplets may have interest ratings assigned to them based upon processing technologies that are available to provide information about the cliplet. For example, if face detection technology is available, then each individual cliplet can be processed to detect faces. The information obtained from this processing, such as whether the cliplet contains a face, is then stored with each individual cliplet. Based on this information an interest rating in face detection then can be determined for each cliplet. The interest ratings are associated per cliplet, rather than per video frame. Computation of the features used in the rating process, however, may have been performed per frame, and stored for later use during the cliplet rating process.

Cliplet ratings can be based on any information relevant to and available for a cliplet. This cliplet rating information includes time stamps, location stamps, audio signal, video signal and all of the information and analyses as discussed above concerning sub-shot boundary detection. Cliplet rating information can take advantage of whatever technology is available to provide information about a cliplet. This includes voice recognition, speaker recognition, face detection, zoom detection, pan detection, any type of audio analyses or recognition, and any type of video analyses or recognition. Any of these technologies may be used to generate an interest rating for an individual cliplet. By way of example, is the interest rating is in detecting faces, then cliplets containing faces would have a higher interest rating than those cliplet without faces, and among cliplets with faces, those which contain faces facing the camera for a greater percentage of the time may be rated higher. As another example, if the interest rating is in close-ups, then cliplets that immediately follow a zooming event would have a higher interest rating than other cliplets.

Cliplet interest ratings may be multi-dimensional. For example, a cliplet may have a rating for "audio activity level" as well as separate ratings for "visual activity level" and "occurrence of faces". Ratings may be absolute numeric values or may be relative orderings (or rankings) between cliplets. By way of example, assume that a rating is to be assigned to a cliplet based on audio. This can be performed by computing a variance in an audio power signal, normalized over all known cliplets. In another example of cliplet rating using vision, assume that camera zoom or pan is detected and higher ratings are assigned to cliplets immediately following a zoom or pan event. In yet another example of cliplet rating using duration is to make a rating proportional to a Gaussian centered on durations of *x* seconds, where *x* might be based on user preferences or expectations.

### Automatic Space Adaptation

The output of the video composition authoring system 200 includes a video composition containing a collage of cliplets. The collage includes a plurality of windows, with multimedia elements contained in each window. Depending on the size of the windows, the collage of cliplets can adapt so that the cliplets will move around and try to fit in the available space, while maintaining some pleasant or aesthetically-pleasing layout. This space adaptation is performed automatically by the element selection and layout module 230.

### Automatic Selection of Cliplet Collage Contents

If a user does not want to work hard, the video composition authoring system 200 can automatically select cliplets to populate the windows of the video composition collage based on user preferences or randomly.

By way of example, in the video composition authoring system 200 can create a plurality of windows that are blank. The windows then can be filled automatically by using one or more of the following algorithms. One algorithm for the automatic selection could be based on interest ratings. For example, the top *N* cliplets in a category can be determined and taken from each category and placed in each of the windows automatically. These categories may include, for example, interesting audio in an audio ratings category, interesting faces in a facial ratings category, and close-ups in a zoom ratings category. The criteria for what constitutes the "top" is dependent on the category. For example, in the zoom category, the cliplets containing close-ups would be considered the "top" in that category.

Another algorithm for automatic selection could be use the interest ratings along with a time constraint. If, out of the top *N* cliplets in a category, two of the cliplets are close in time, then the module 230 assumes that the two cliplets are from the same scene. In order to provide variety, one of the cliplets is chosen and the other is discarded.

Another algorithm is to perform a random selection from the top cliplets in each category. For example, instead of taking only top *N* cliplets in each category, this algorithm designates a top *M* number of cliplets from a category (where *M*>*N*), and random selects *N* cliplets from the *M* available cliplets. In this manner, the variety is maintained in the output video composition.

### Usage Statistics

The element selection and layout module 230 also can select and populate the video composition collage based on usage statistics. Usage statistics track the frequency of cliplet usage. These results may be displayed to a user. Usage statistics are computed as users interact with cliplets through the element selection and layout module 230.

Every time a user views or selects a cliplet the usage rating for that cliplet increases. Usage statistics are a type of cliplet interest rating that alleviates the need to explicitly ask the user to specify what type or category of cliplet he prefers. Over time usage statistics become more accurate in determining which cliplets are interesting to a user.

Usage statistics can be correlated with other cliplet interest ratings. This correlation can be used to adjust and train the interest ratings and the cliplet rating process over time based on the usage ratings and what is interesting to the user. By way of example, if a user is consistently looking at cliplets that have a lot of interesting audio, then it can be deduced that the audio interest ratings are important to the user. Thus, it can be determined that the user prefers and is interested in cliplets having high audio interest ratings. By correlating the usage statistics with the interest ratings, over time the system 200 "learns" the preferences of the user. This knowledge can be used, for example, when selecting cliplets to populate windows of the video composition collage.

### Video Composition Output Style Selection

The element selection and layout module 230 allows a user to select an output style of the video composition. According the style selected, the module 230 selects and arranges data elements in accordance with the selected style. For example, if a user selected a "romantic" style, the module 230 might select soft music, choose video elements lacking fast action, add slow motion, and slightly blur the video elements in keeping the romantic theme.

### Iterative Refinement Module

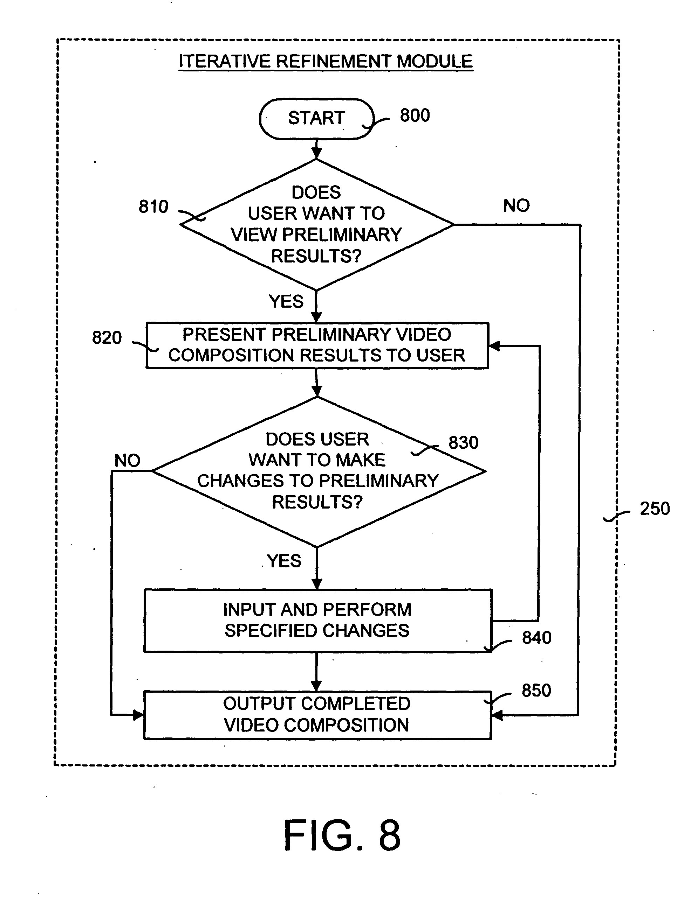

FIG. 8 is a detailed flow diagram illustrating the operational details of the iterative refinement module 250 shown in FIG. 2. The iterative refinement module 250 presents preliminary video compositions results to a user. If the user likes the results the preliminary video compositions results are left unchanged and sent as a video composition output. If the user does not like the results, the iterative refinement module 250 allows the user to make changes and refine the data elements or their layout that is unacceptable to the user.

The operation of the iterative refinement module 250 being (box 800) by determining whether a user wants to view a preliminary video composition results (box 810). If so, then the module 250 presents the preliminary video composition results to the user (box 820). If not, then the preliminary video composition results are considered a completed video composition. Next, a determination is made whether the user wants to make changes to the preliminary video composition results (box 830). If the user does want to make changes, the module 250 allows the user to input the changes and then performs those changes specified (box 840). Then the updated preliminary video composition results are presented to the user (box 820). This iterative process continues until the user is satisfied with the preliminary video composition results. If the user does not want to make changes, then the preliminary video composition results are sent as output as a completed video composition (box 850).

### Functionality of the Iterative Refinement Module

The iterative refinement module 250 contains certain functionality that allows a video composition to be authored. The specific functionality is as follows:

### Drag and Drop Refinement

The iterative refinement module 250 provides drag and drop functionality such that elements of the video composition may be modified, added, or deleted. This drag and drop functionality allows a user to drag and drop a desired cliplet to a desired position within the video composition.

### Refinement of Cliplet Boundaries

Even though the starting and ending points (or editing points) of cliplets already are determined, a user may be unsatisfied with them. The iterative refinement module 250 allows the user to lengthen cliplets by merging a cliplet with its temporal neighbors. This is achieved by using an input device to merge at least two of the video cliplets such that a first cliplet merges with a second cliplet to create a new, third cliplet. The third cliplet is the duration of the first and second cliplets combined. This allows a user to lengthen and combine a cliplet with any of its temporal neighbors with requiring any scrubbing.

If the user is still unhappy with the editing points of a cliplets, the iterative refinement module 250 includes functionality that allows a user to extend or shrink either the starting or the ending points. To avoid scrubbing, the user has the option of having the system automatically find one or two new editing points. Through the input device, the use can request that the iterative refinement module 250 present other starting and ending point possibilities for the cliplet.

### Title and Credits Generation

Title and credit generation require a user to enter the cast of the video composition collage and who contributed to the video footage. Next, the iterative refinement module 250 generates a credits and cast list. If less user input is desired, the module 250 can use face recognition technology to "learn" the names of people. This occurs by having the user enter name of person once and then the module 250 automatically recognizes those people subsequently and is able to automatically create a cast list.

### Text Annotation

Text may be added to the video composition either by user input or automatically by the system 200. Text may be used to annotate, describe, or compliment the video composition. The iterative refinement module 250 provides a user the functionality to add text annotation and determine where on the video composition the text will be located. In addition, various text styles and sizes are available for the user to choose.

The foregoing description of the invention has been presented for the purposes of illustration and description. It is not intended to be exhaustive or to limit the invention to the precise form disclosed. Many modifications and variations are possible in light of the above teaching. It is intended that the scope of the invention be limited not by this detailed description of the invention, but rather by the claims appended hereto.

## Claims

1. In a computer system having a user interface including a display device and an input device, a method for displaying a video composition including short segments of called video cliplets, comprising:
displaying a background area on the display device;
displaying a plurality of video windows over the background area, the plurality of video windows arranged in a two-dimensional arrangement; and
using a video composition authoring system to determine the contents of each of the plurality of video windows.

2. The method as set forth in claim 1, wherein the contents of each of the plurality of video windows includes multimedia elements..

3. The method as set forth in claim 1, wherein using a video composition authoring system to determine the contents further comprises using cliplet interest ratings.

4. The method as set forth in claim 3, wherein cliplet interest ratings include at least one of the following: (a) voice recognition; (b) speaker recognition; (c) face detection; (d) zoom detection; (e) pan detection; (f) any type of audio analyses; (g) any type of audio recognition; (h) any type of video analyses; (i) any type of video recognition.

5. The method as set forth in claim 4, wherein the cliplet interest ratings are correlated with cliplet usage statistics.

6. The method as set forth in claim 1, further comprising sorting and displaying the video cliplets by cliplet interest ratings.

7. The method as set forth in claim 1, further comprising providing a text annotation feature allowing text to be added any ones of the plurality of video windows and the background area.

8. The method as set forth in claim 7, wherein the text is added by one of the following: (a) by user interaction; (b) automatically by the video composition authoring system.

9. The method as set forth in claim 1, further comprising providing drag and drop feature that allows a user interactivity with the video composition through the input device.

10. The method as set forth in claim 9, wherein the drag and drop feature allows a user to move video cliplets from one of the plurality of video windows to another.

11. The method as set forth in claim 1, further comprising providing a cast and credits list that displays at least one of: (a) a cast of the video composition; (b) a credit list of the video composition describing what persons created the video composition.

12. A computer-readable medium having computer-executable instructions for performing the method recited in claim 1.

13. A method in a computer system for displaying on a display device a video composition containing video cliplets, comprising:
providing a background area to display a background picture;
providing a plurality of video windows containing video cliplets;
providing a main video window that is generally larger than the plurality of video windows for playing any of the video cliplets therein; and
displaying text annotations within at least one of the plurality of video windows.

14. The method as set forth in claim 13, further comprising generating the video composition using a video composition authoring system..

15. The method as set forth in claim 13, further comprising a "Play from Here" feature within the main video window that plays a video cliplet within the main video window from a current position until the end of the cliplet.

16. The method as set forth in claim 13, wherein the video composition is a cliplet collage.

17. The method as set forth in claim 13, further comprising an e-mail feature displayed on the video composition that allows a user to e-mail the video composition.

18. The method as set forth in claim 14, wherein the video composition is a video postcard.

19. The method as set forth in claim 13, wherein the video composition is a highlight video generated by chaining each of the cliplets with the plurality of video windows together and playing the highlight video within the main video window.

20. The method as set forth in claim 13, further comprising providing background music for the video composition.

21. A graphical user interface displayed on a display device for displaying and interacting with a video composition containing video cliplets, comprising:
a background area that displays one of the following: (a) a background photograph; (b) a background video;
a plurality of video windows located within the background area that contains the video cliplets;
a title area that displays the title of the video composition;
wherein the video cliplets located within the plurality of windows are selected by a video composition authoring system.

22. The graphical user interface as set forth in claim 21, further comprising a cast and credits list that displays at least one of: (a) a cast of the video composition; (b) persons involved in making the video composition.

23. The graphical user interface as set forth in claim 21, further comprising a main video window for playing cliplets therein.

24. The graphical user interface as set forth in claim 21, further comprising an e-mail feature located on the graphical user interface that allows a user to send the video composition as an e-mail.
